# EUROPEAN PATENT APPLICATION

(11) **EP 1 278 116 A1**
(43) Date of publication of application: **22.01.2003**
(21) Application number: 02253809.4
(22) Date of filing: 30.05.2002
(51) Int. Cl.: G06F 3/033

(54) **Operator interface**

(30) Priority: 10.07.2001 US 903135
(71) Applicant: Hewlett-Packard Company, Palo Alto, CA 94304 (US)
(72) Inventor: Chung, Sun Woo, Singapore 128798 (SG)
(74) Representative: Jehan, Robert

(57) **Abstract**

An operator interface (12) is disclosed for a computer system having a relatively small display screen (10) such as a PDA or pocket PC. The interface (12) is adapted to replace the function of a menu bar (11) to free up additional display space on the display screen (10) normally dedicated to the menu bar (11). The operator interface (12) includes a menu system (12,25,27) that is normally hidden from view and is invoked on the display means in response to an action initiated by the operator, such as pressing a stylus, against the display screen (18) or clicking and holding a button associated with a pointing device such as a mouse or trackball.

## Description

The present invention relates to an operator interface for a computer system, preferably for controlling and entering data into a digital computer system and preferably in the form of a menu system for a portable computer utilizing a relatively small display screen.

A display screen on a portable computer system such as a Personal Digital Assistant (PDA) or pocket or palm top personal computer (PC) is relatively small in area when compared to a desktop or laptop computer. As a result screen space can be very valuable. Conventional application windows on such portable systems typically display a menu bar which is often aligned with a horizontal border of the window such as along the lower border. The conventional menu bar includes a plurality of menu options such as 'File', 'Edit', and 'Tools' each of which may be associated with a pull-down menu. The conventional menu bar consumes up to about 10% of the available area of an application window.

The present invention seeks to provide an improved operator interface.

According to an aspect of the present invention, there is provided an operator interface as specified in claim 1.

The preferred embodiment can provide a menu system that better utilizes the available space in computer systems having relatively small display screens.

The preferred embodiment proposes to eliminate the conventional menu bar associated with such systems and to replace this with a pop-up menu. The pop-up menu may normally be hidden from view and may be invoked on the screen or window when it is required. The pop-up menu may be invoked, e.g., by pressing and holding a stylus against the screen or by clicking and holding a button associated with a pointer control device such as a mouse or trackball. The pop-up menu may be displayed for a predetermined time period after an operator presses the stylus against the screen or clicks the button on the pointer control device. The pop-up menu may be displayed in any desired position on the screen or window. The desired position on the window or screen may be indicated by the operator by pressing and holding the stylus or clicking and holding the button on the desired position. This may avoid the need to search for the menu because it may be invoked in any position on the screen.

The pop-up menu may be any convenient shape or size. In one form the pop-up menu may be substantially square or rectangular. The pop-up menu may be at least 20 x 20 pixels in size. Where the pop-up menu is to contain graphics such as an icon or icons, it may be up to 60 x 60 pixels in size or more. The pop-up menu may be divided into plural menu spaces or cells. Each menu cell may itself be a smaller square. Each menu cell may be at least 20x20 pixels in size. Where the cell is to contain a graphic image such as an icon or icons, each graphic image within a cell may be at least 16x16 pixels in size. Each menu cell may be contiguous with another menu cell on two sides. The menu cells may be in the form of a 2x2 array, i.e., two menu cells wide and two menu cells high.

In an application where there are three menu items e.g. 'File', 'Edit' and 'Tools', the pop-up menu may be divided into four menu cells each at least 20 x 20 pixels in size. One menu cell may be blank or may include a context sensitive menu item. The content of the context sensitive menu item may vary or change its function according to the position of the menu item on the window or screen where the pop-up menu is invoked. The content of the context sensitive menu item may also vary or change according to the current application or what the operator is currently doing in the application. In one form the context sensitive menu item may be placed in a top left corner of the pop-up menu array. Alternatively, it may be placed in the top right hand corner or in any position that is convenient relative to other menu items.

An alternative to a blank cell is to eliminate the cell altogether by making the cell transparent to show the content area of the current application. In this case the pop-up menu ceases to be substantially square or rectangular since there may be at least one cell missing.

The operator may select a function associated with a menu item by placing a stylus or cursor on the menu space associated with the menu item. The stylus or cursor need not be centred on the menu cell.

If the operator does nothing for a first predetermined period of time, the context sensitive menu item may be displayed. If the operator does nothing for a second predetermined period of time, the pop-up menu itself may disappear from view.

In some embodiments the pop-up menu may be invoked without the context sensitive menu item. The pop-up menu may disappear after a predetermined period of time if the operator does nothing. Alternatively, the pop-up menu may be invoked in combination with the context sensitive menu item. Both the pop-up menu and the context sensitive menu item may disappear after a predetermined time interval if the operator does nothing. Alternatively, the pop-up menu may disappear after the predetermined time interval and the context sensitive menu item may remain or the context sensitive menu item may disappear and the pop-up menu may remain. A further alternative is that the pop-up menu and the context sensitive menu item may both disappear in a staggered time interval and in any sequence or reverse sequence if the operator does nothing for the predetermined period of time.

The above alternatives may be capable of being set by the operator or may be defaultly programmed into the operating system.

In an application where there are two menu items on the menu bar, the pop-up menu may include two blank or transparent menu cells, or in the case where the pop-up menu includes a context sensitive menu item, one blank or transparent menu cell.

In an application where there are six menu items on the menu bar, the menu cells may be in the form of a 3 x 3 array, i.e., three menu cells wide and three menu cells high. The pop-up menu may include three blank or transparent cells or in the case where the pop-up menu includes a context sensitive menu item, two blank or transparent cells.

Since most programs do not allow a user to eliminate the menu bar, the pop-up menu feature may be adapted into an application source code before installation into a portable PC system. In most embodiments there may be essentially little or no difference in the interaction of the application with the pop-up menu feature when compared with the interaction of a conventional program with a menu bar.

Embodiments of the present invention are described below, by way of example only, with reference to the accompanying drawings in which:
Fig. 1 shows a conventional menu bar associated with a PDA screen;
Figs. 2A and 2B show a PDA screen incorporating an embodiment of a pop-up menu;
Fig. 3 shows an array of menu cells including four menu items;
Figs. 4A and 4B show sub menus displayed when an operator selects a menu item;
Fig. 5 shows an array of menu cells including three menu items;
Figs. 6A and 6B show examples of arrays of menu cells including seven menu items;
Fig. 7 shows an array of menu cells in which menu items are represented by graphics icons; and
Fig. 8 shows examples of arrays of menu cells as the number of menu items is varied.

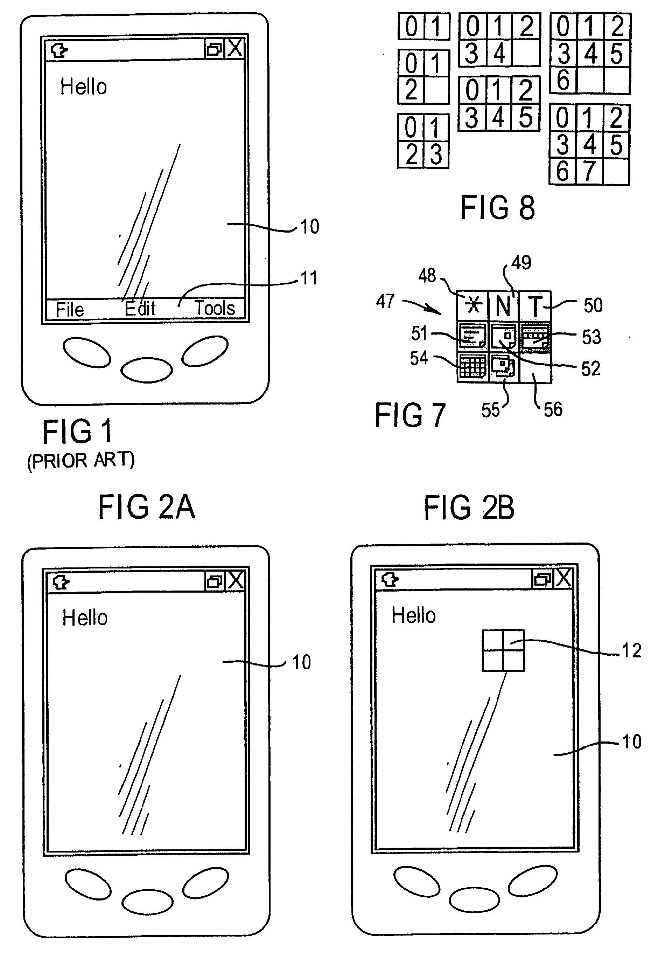

Fig. 1 shows PDA screen 10 displaying a conventional application menu bar 11. Menu bar 11 includes three menu items (File, Edit, Tools) and consumes approximately 10% of the available display area of PDA screen 10. Since menu bar 11 cannot be eliminated in most programs, the available screen area is effectively reduced by 10%. This is a substantial loss on a PDA screen which may be no more than approximately 240 x 300 pixels in size. Referring to Figs. 2A and 2B, the preferred embodiment proposes a pop-up menu which is hidden from view until it is invoked by an operator. Fig. 2A shows the appearance of screen 10 prior to invoking the pop-up menu. The pop-up menu 12 shown in Fig. 2B is invoked by pressing a stylus (not shown) against screen 10. The location of pop-up menu 12 is preferably not fixed but may be determined by the position of the stylus when it is pressed against screen 10. Preferably the stylus is held against screen 10 for a predetermined period of time (e.g. 1-3 seconds) before pop-up menu 12 is invoked and appears on screen 10.

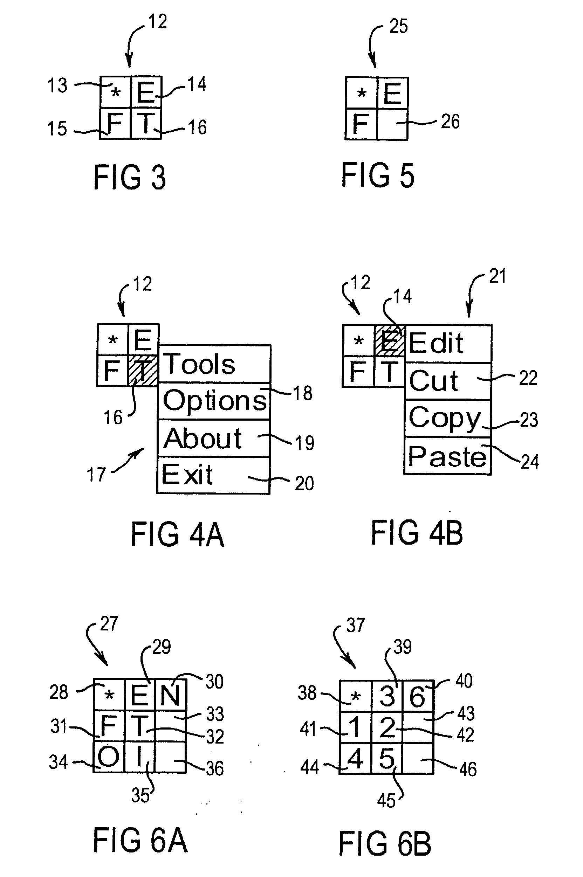

Fig. 3 shows pop-up menu 12 in greater detail. Pop-up menu 12 is 40 x 40 pixels in size and includes contiguous menu cells 13, 14, 15, 16 each 20 x 20 pixels in size. Menu cells 14-16 are occupied by menu items 'E' (Edit), 'F' (File) and 'T' (Tools). Menu cell 13 is occupied by menu item "*". "*" is a context sensitive menu item, the contents of which vary according to its position on screen 10.

The operator can select a function associated with a menu item by pressing the stylus against the corresponding menu cell. The stylus does not have to be centred on the menu cell. For example, if the operator wishes to select the menu item 'Tool' he/she presses the stylus against menu cell 16 marked 'T'. Referring to Fig. 4A this causes a sub-menu box 17 to be displayed adjacent menu-cell 16. The stylus may then be used to select a function associated with one of sub-menus 18-20 in sub-menu box 17.

If the operator wishes to select the menu item 'Edit', he/she presses the stylus against menu-cell 14 marked 'E'. Referring to Fig. 4B this causes a sub-menu box 21 to be displayed adjacent menu-cell 14. The stylus may then be used to select a function associated with one of sub-menus 22-24 in sub-menu box 21.

Context sensitive menu item "*" may be displayed continuously or it may be displayed for a predetermined period of time after pop-up menu 12 is invoked on screen 10. As noted above the function associated with menu item "*" may be fixed or it may vary according to the position on screen 10 that pop-up menu 12 is invoked. If the operator does nothing, pop-up menu 12 may disappear from view of a predetermined period of time after it is invoked (e.g. 10-15 seconds).

Fig. 5 shows an alternative pop-up menu 25 including three menu items, namely: *, E, F and blank menu-cell 26.

Fig. 6A shows pop-up menu 27 including nine contiguous menu-cells 28-36 each 20 x 20 pixels in size. Menu cells 28-30, 31-32 and 34-35 are occupied by seven menu items: "*", "E", "N", "F", "T", "O" and "I". Menu cells 33 and 36 are left blank intentionally. As described with reference to Fig. 3, the operator can select a function associated with a menu item by pressing the stylus against the corresponding menu cell. "*" again represents a context sensitive menu item.

Fig. 6B shows an alternative pop-up menu 37 including seven menu items occupying menu cells 38-40, 41-42 and 44-45. Menu cells 43 and 46 are left blank intentionally. Alternatively, menu cells 43 and 46 may be transparent to show the content area of the current application.

Fig. 7 shows an example of a calendar menu 47 including eight menu items occupying menu cells 48-50, 51-53 and 54-55. Menu cell 56 is left blank or may be transparent to show the content area of the current application. The menu items occupying cells 48-50 denote context menu, New and Tool respectively. The menu items occupying cells 51-55 are represented by icons and denote agenda, day, weekly (current view), monthly and yearly respectively. The current status of a menu item is represented in cell 53 by a darkened background. The background can be any colour to indicate its current state.

Fig. 8 shows one example of an arrangement rule for presenting arrays of menu cells as the number of menu items is increased from two in the top left corner to eight in the bottom right corner. According to the preferred arrangement rule cells may be filled from left to right before moving to the next row. Adoption of the rule may allow an operator to anticipate where the menu items will appear. However, alternative rules for presenting arrays with differing numbers of menu items may be adopted and are within the scope of the present invention.

The pop-up menu feature typically may be programmed into the application source code before installation into the PDA. The reason for this is that most programs do not allow the user to eliminate the menu bar. As noted above in most embodiments there may be little or no difference in the interaction of the application with the pop-up menu feature when compared with the interaction of a conventional program with a menu bar.

Because the menu system taught herein replaces the conventional application menu bar and invokes a menu system only when it is needed, it can provide approximately 10% more usable screen area without a need to increase the size of the display screen. It may also avoid the need to search the location of a menu item because the menu system may be invoked by the user anywhere on the display screen and at any time.

Finally, it is to be understood that various alterations, modifications and/or additions may be introduced into the constructions and arrangements of parts previously described without departing from the scope of the claims.

The disclosures in United States patent application No. 09/903,135, from which this application claims priority, and in the abstract accompanying this application are incorporated herein by reference.

## Claims

1. An operator interface for a computer system having a display means (10), said interface including a menu system (12,25,27,4) that is normally hidden from view and is invoked on the display means (10) in response to an action initiated by an operator.

2. An interface according to claim 1, wherein said display means (10) includes a display screen (10) and said menu system is invokable upon the pressing of a stylus against a position on the display screen or upon the clicking and holding of a button associated with a pointing device.

3. An interface according to claim 1 or 2, wherein said menu system is displayable on said display means for a predetermined period of time after an action initiated by an operator.

4. An interface according to claim 1, 2 or 3, wherein said menu system (10) includes at least four menu cells (16) arranged in an array.

5. An interface according to claim 4, wherein each menu cell (16) is at least 20x20 pixels in size.

6. An interface according to any preceding claim, wherein said menu system (10) includes at least one context sensitive menu item (13).

7. An interface according to claim 1, including a displayed menu bar (11).

8. A personal digital assistant including an operator interface according to any preceding claim.

9. A portable personal computer including an operator interface according to any preceding claim.

10. A pocket personal computer including an operator interface according to any preceding claim.
